# EUROPEAN PATENT SPECIFICATION

(11) **EP 3 298 756 B1**
(45) Date of publication and mention of the grant of the patent: **18.12.2019**
(21) Application number: 16726500.8
(22) Date of filing: 20.05.2016
(51) Int. Cl.: H04L 29/08, H04W 4/50, G06F 9/445, G06Q 30/02

(54) **INTERFACING WITH SERVERS HAVING DIFFERENT APIS TO OBTAIN ADVERTISEMENT DATA**
SCHNITTSTELLENBILDUNG MIT SERVERN MIT VERSCHIEDENEN APIS ZUR GEWINNUNG VON WERBEDATEN
INTERFACE AVEC DES SERVEURS AYANT DIFFÉRENTES API POUR OBTENIR DES DONNÉES DE PUBLICITÉ

(30) Priority: 21.05.2015 US 201514719266
(43) Date of publication of application: 28.03.2018
(73) Proprietor: Outfit7 Limited, London EC3M 6BN (GB)
(72) Inventor: PISTOTNIK, Marko, 1295 Ivancna Gorica (SI)
(74) Representative: Hoffmann Eitle
(86) International application number: PCT/EP2016/061433
(87) International publication number: WO 2016/185021

(56) References cited:
- US-A1- 2012 246 017
- US-A1- 2015 040 157
- US-A1- 2015 112 798

## Description

### TECHNICAL FIELD

The present disclosure generally relates to technology to enable a user processing device to obtain and render advertisement data defining advertisements from a plurality of advertisement servers, wherein each advertisement server provides a different respective application programming interface, API, for communication therewith.

### BACKGROUND

Many applications ("apps") running on user processing devices (such as smartphones, tablet computers, laptop computers, desktop computers, games consoles, etc.) display advertisements to the user, such as text, image, video and rich-media advertisements.

However, the delivery of data defining advertisements to a user processing device presents technical problems. These problems arise because the user processing device obtains the data for different advertisements from different advertisement servers, and each advertisement server provides a different respective application programming interface, API, for communication therewith.

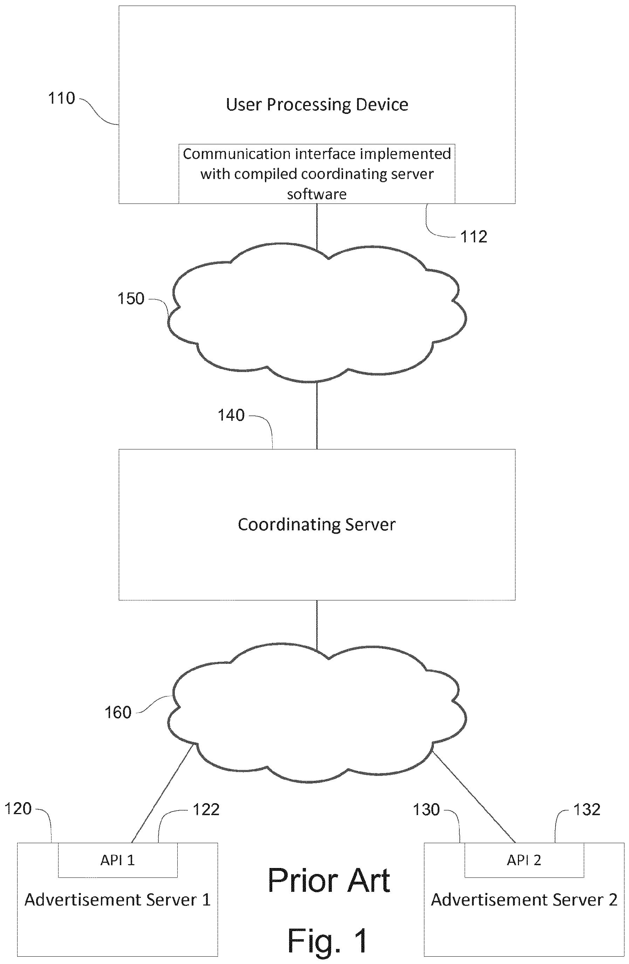

Referring to Figure 1, this technical problem has been addressed up until now by providing a coordinating server 140 between the user processing device 110 and the advertisement servers 120, 130. Two advertisement servers 120, 130 are shown in Figure 1, although there may be more than this.

User processing device 110 obtains advertisement data from advertisement server 120 or advertisement server 130 by sending a request, via a network 150 such as the internet, to coordinating server 140. To enable the user processing device 110 to communicate with the coordinating server 140, the user processing device 110 has installed thereon a communication interface 112 specific to the coordinating server 140. More particularly, the communication interface 112 is implemented with compiled software specific to the coordinating server 140.

Coordinating server 140 processes an advertisement request from a user processing device 110 and generates a request in the specific format required by the API 122, 132 of the appropriate advertisement server 120, 130. Coordinating server 140 therefore contains the necessary software to convert an advertisement request from a user processing device 110 into a format compatible with the API of any of the advertisement servers 120, 130.

Coordinating server 140 transmits the generated advertisement request to the appropriate advertisement server via network 160 (which may be the same as network 150). As the request is in the correct format for the API of the advertisement server, the advertisement server can correctly process the request and return the requested advertisement data, via network 160, to coordinating server 140.

Coordinating server 140 processes the received advertisement data to transform it into a format that the user processing device 110 can handle, and then returns the transformed advertisement data, via network 150, to the communication interface 112 of the user processing device 110.

This system suffers from a number of problems, however. For example, two servers are required for the supply of advertisement data, namely coordinating server 140 and an advertisement server 120 or 130. The use of two servers is expensive and furthermore introduces delays in the process of delivering the advertisement data. In addition, every time a new advertisement server with a different API is added to the system, the software in the coordinating server 140 needs to be modified to include software that can communicate with the API of the new advertisement server.

As further background, US 2015/040157 A1 describes an AV playback device which includes: an advertisement downloader which accesses a predetermined advertisement script server via the Internet, obtains, from the advertisement script server, an advertisement script including information indicating an address of one of advertisement data servers on the Internet, accesses the address on the Internet included in the obtained advertisement script, and obtains advertisement data located at the address; and an advertisement player which displays the advertisement data obtained by the advertisement downloader on an AV monitor. The advertisement data servers each stores an advertisement corresponding to a different advertising company.

As further background, US 2012/246017 A1 describes a method of rendering a web page that includes content from multiple web sites, which includes executing a first operation to create an empty iframe on a web page being rendered. The iframe is created without content. A second operation is executed to place content in the iframe. The content includes a script tag to download and execute a script from a web site. Based on the script tag, the script from the web site is downloaded and executed. An additional operation is executed to render the web page concurrently with executing at least one operation in the script downloaded from the web site. The web site is a second web site that is different from a first web site that supplied the instructions to render the web page. The rendered web page includes content from the first web site and content from the second web site

### SUMMARY

The invention is set out in the appended independent claims. According to one embodiment, there is provided a system comprising a plurality of advertisement servers and a user processing device. Each advertisement server is operable to provide advertisement data defining advertisements and each advertisement server provides a different respective application programming interface, API, for communication therewith. The user processing device comprises a script loader, an advertisement request receiver, an advertisement server selector, an advertisement translator and an advertisement renderer. The script loader is operable to download a respective interface script for each advertisement server. The advertisement request receiver is operable to receive an advertisement request from an application on the user processing device. The advertisement server selector is operable to select an advertisement server from the plurality of advertisement servers as a selected advertisement server from which to obtain advertisement data for the advertisement request. The advertisement translator is operable to translate the advertisement request using the interface script for the selected advertisement server into a format required by the API of the selected advertisement server, and is further operable to translate advertisement data received from the selected advertisement server. The advertisement renderer is operable to render the translated advertisement data.

An embodiment also provides a user processing device operable to obtain and render advertisement data defining advertisements from a plurality of advertisement servers, each advertisement server providing a different respective application programming interface, API, for communication therewith. The user processing device comprises a script loader, an advertisement request receiver, an advertisement server selector, an advertisement translator and an advertisement renderer. The script loader is operable to download a respective interface script for each advertisement server. The advertisement request receiver is operable to receive an advertisement request from an application on the user processing device. The advertisement server selector is operable to select an advertisement server from the plurality of advertisement servers as a selected advertisement server from which to obtain advertisement data for the advertisement request. The script loader is operable to determine if interface script for the selected advertisement server is available on the user processing device and is operable to download the interface script if it is determined that the interface script is not available on the user processing device. The advertisement translator is operable to translate the advertisement request using the interface script into a format required by the API of the selected advertisement server, and is further operable to translate advertisement data received from the selected advertisement server. The advertisement renderer is operable to render the translated advertisement data.

An embodiment also provides a method of obtaining and rendering advertisement data defining advertisements from an advertisement server within a plurality of advertisement servers that each provide a different respective application programming interface, API, for communication therewith. The method is performed by a user processing device and the method comprises: receiving an advertisement request from an application on the user processing device; selecting an advertisement server from the plurality of advertisement servers as a selected advertisement server from which to obtain advertisement data for the advertisement request; translating the advertisement request using an interface script for the selected advertisement server into a format required by the API of the selected advertisement server; transmitting the translated advertisement request to the selected advertisement server; translating advertisement data received from the selected advertisement server using the interface script; and rendering the translated advertisement data.

An embodiment also provides a non-transitory storage medium storing computer program instructions which, when executed by a processor of a user processing device, cause the user processing device to obtain and render advertisement data defining advertisements from an advertisement server within a plurality of advertisement servers that each provide a different respective application programming interface, API, for communication therewith. The computer program instructions cause the user processing device to obtain and render the advertisement data by: receiving an advertisement request from an application on the user processing device; selecting an advertisement server from the plurality of advertisement servers as a selected advertisement server from which to obtain advertisement data for the advertisement request; translating the advertisement request using an interface script for the selected advertisement server into a format required by the API of the selected advertisement server; transmitting the translated advertisement request to the selected advertisement server; translating advertisement data received from the selected advertisement server using the interface script; and rendering the translated advertisement data.

### BRIEF DESCRIPTION OF THE DRAWINGS

Embodiments of the invention are described herein in detail, by way of example only, with reference to the accompanying drawings, in which:
Figure 1 is a schematic diagram of a prior art system.
Figure 2 is a schematic diagram showing an example of a system in which various embodiments of the invention may be practised
Figure 3 schematically shows an example of a general kind of programmable processing apparatus that may be used to implement a user processing device in certain embodiments of the invention.
Figure 4 provides a schematic overview of part of the system of Figure 2, illustrating some of the functional processing modules of a user processing device and a plurality of advertisement servers.
Figure 5 schematically illustrates further functional processing modules of a user processing device in certain embodiments.
Figure 6 shows processing operations performed by a user processing device and a configuration server in certain embodiments.
Figures 7A and 7B show processing operations performed by a user processing device, an interface script server and a selected advertisement server in certain embodiments.
Figure 8 shows processing operations performed by a user processing device in certain embodiments to obtain and render advertisement data from an advertisement server.

### DETAILED DESCRIPTION OF EMBODIMENTS

Although embodiments of the invention will be described below, it will be evident that various modifications may be made to these embodiments without departing from the scope of the invention. Accordingly, the following description and the accompanying drawings are to be regarded as illustrative rather than restrictive.

In the following description and in the accompanying drawings, numerous details are set forth in order to provide an understanding of various embodiments of the invention. However, it will be evident to those skilled in the art that embodiments may be practiced without these details.

Reference is made in the following to applications or "apps". These applications may take many forms and may have many different purposes.

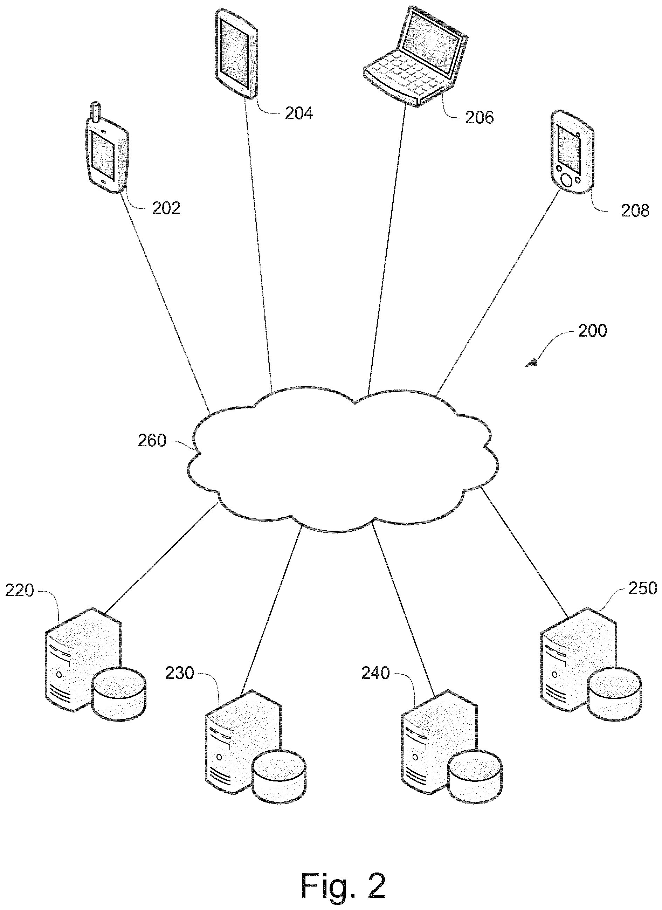

Figure 2 is a schematic diagram showing an example of a system 200 in which various embodiments of the invention may be practised. In the example shown, a plurality of user processing devices 202, 204, 206, 208, communicate via network 260 with a plurality of advertisement servers 220, 230, at least one configuration server 240, and at least one interface script server 250.

The network 260 may comprise one or more networks, such as the internet, a telephone network, a cellular data network, etc. The network 260 may also comprise a virtual private network (VPN), a local area network (LAN), a wide area network (WAN), or any other form of network.

Each user processing device may comprise any processing device that can run applications, such as a smartphone 202, a tablet computer 204, a laptop computer 206, a games console 208, or any other form of user processing device such as a desktop computer, a personal digital assistant, a smart watch, etc. Each of the user processing devices communicates with the network 260 through any suitable communication link, such as a wireless communication link, for example a Wi-Fi or cellular telephone data link, etc, or a wired communication link. Each communication link may not be permanent.

Four user processing devices 202, 204, 206, 208 are shown in Figure 2 by way of example, although there may be more than this or fewer. Similarly, two advertisement servers 220, 230 are shown in Figure 2, although there may be more than this.

Each server 220, 230, 240, 250 may, in practice, be implemented as one or more servers. By way of example, each server 220, 230, 240, 250 may comprise one or more cloud servers. Furthermore, although advertisement server 220, advertisement server 230, configuration server 240 and interface script server 250 are shown as physically separate servers, instead two or more of the servers may be part of a single physical server. The term "server" should therefore be construed accordingly.

Each advertisement server 220, 230 provides advertisement data defining advertisements such as text, image, video and/or rich-media advertisements. Each advertisement server 220, 230 provides a different respective application programming interface, API, for communication therewith.

As will be explained in more detail below, although each advertisement server 220, 230 provides a different respective API for communication therewith, the present inventors have devised a technique which allows a user processing device 202, 204, 206, 208 to interface with the different advertisement servers without the need for communications to pass through a coordinating server as in prior systems. By removing the need to use a coordinating server, cost and time delays may be reduced in certain embodiments.

More particularly, as will be explained further below, a user processing device in certain embodiments utilises interface script, in a language such as, by way of non-limiting example, JavaScript, to generate an advertisement request in a format required by the API of a selected advertisement server. Different respective script is used for each advertisement server with a different API. The user processing device further utilises the interface script to translate advertisement data received from the selected advertisement server. A script loader is provided on the user processing device to download a respective interface script for each advertisement server. In one embodiment, the script loader is arranged to determine if interface script for a selected advertisement server is already available on the user processing device and to download the interface script if it is determined that the interface script is not available on the user processing device. Different respective scripts for the different APIs of the advertisement servers prevent the need for the user processing device to have one piece of compiled software that could handle the communications with the different APIs of all advertisement servers, and that would need to be updated each time the user processing device needed to communicate with an advertisement server having a different API. Separate scripts also prevent the need for the user processing device to have a separate software development kit (SDK) for each advertisement server, which would use up considerable storage resources on the user processing device.

Configuration server 240 provides configuration data for use by a user processing device 202, 204, 206, 208.

Interface script server 240 is operable to make available for download by a user processing device a respective interface script for each advertisement server 220, 230 that has a different API. The interface script for a particular advertisement server is operable, when executed, to translate an advertisement request into a format required by the API of the advertisement server and is further operable, when executed, to translate advertisement data received from the advertisement server. By way of non-limiting example, each interface script may comprise JavaScript.

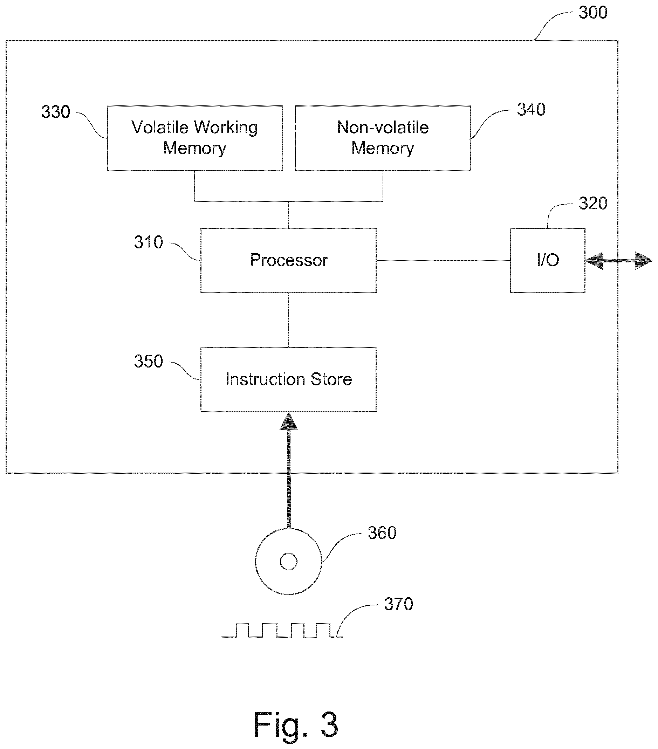

Referring now to Figure 3, an example of a general kind of programmable processing apparatus 300 that may be used to implement a user processing device in embodiments of the present invention is shown.

The programmable processing apparatus 300 comprises one or more processors 310, one or more input/output communication modules 320, one or more volatile working memories 330, one or more non-volatile memories 340 and one or more instruction stores 350 storing computer-readable instructions which can be executed by a processor 310 to effect the functional processing modules and to perform the processing operations as described hereinafter.

At least one input/output communication module 320 comprises apparatus for communicating with network 260 which, as stated previously, may comprise one or more networks, such as the internet, a telephone network, a cellular data network, a virtual private network (VPN), a local area network (LAN), a wide area network (WAN), or any other form of network. At least one input/output communication module 320 comprises apparatus for communicating with an input device such as a keyboard or game controller, and an output device such as a display screen, projector, etc.

An instruction store 350 is a non-transitory storage medium, which may comprise a non-volatile memory, for example in the form of a read-only memory (ROM), a magnetic computer storage device (for example a hard disk) or an optical disk, which is pre-loaded with the computer-readable instructions. Alternatively, an instruction store 340 may comprise writeable memory, such as random access memory (RAM) and the computer-readable instructions can be input thereto from a computer program product, such as a non-transitory computer-readable storage medium 360 (for example an optical disk such as a CD-ROM, DVD-ROM, etc.) or a computer-readable signal 370 carrying the computer-readable instructions.

The computer-readable instructions comprise advertisement management instructions which, when executed, cause the user processing device to implement an advertisement manager which obtains and renders advertisement data defining advertisements from an advertisement server within a plurality of advertisement servers that each provide a different respective application programming interface, API, for communication therewith. The computer program instructions cause the user processing device to obtain and render the advertisement data by receiving an advertisement request from an application on the user processing device, selecting an advertisement server from the plurality of advertisement servers as a selected advertisement server from which to obtain advertisement data for the advertisement request, translating the advertisement request using an interface script for the selected advertisement server into a format required by the API of the selected advertisement server, transmitting the translated advertisement request to the selected advertisement server, translating advertisement data received from the selected advertisement server using the interface script, and rendering the translated advertisement data.

Aspects of the configuration and processing operations of a user processing device 202, 204, 206, 208, advertisement server 220, 230, configuration server 240, and interface script server 250 that are helpful for understanding embodiments of the present invention are described in detail below, while description of other aspects, which will be familiar to those skilled in the art, is omitted for the sake of clarity.

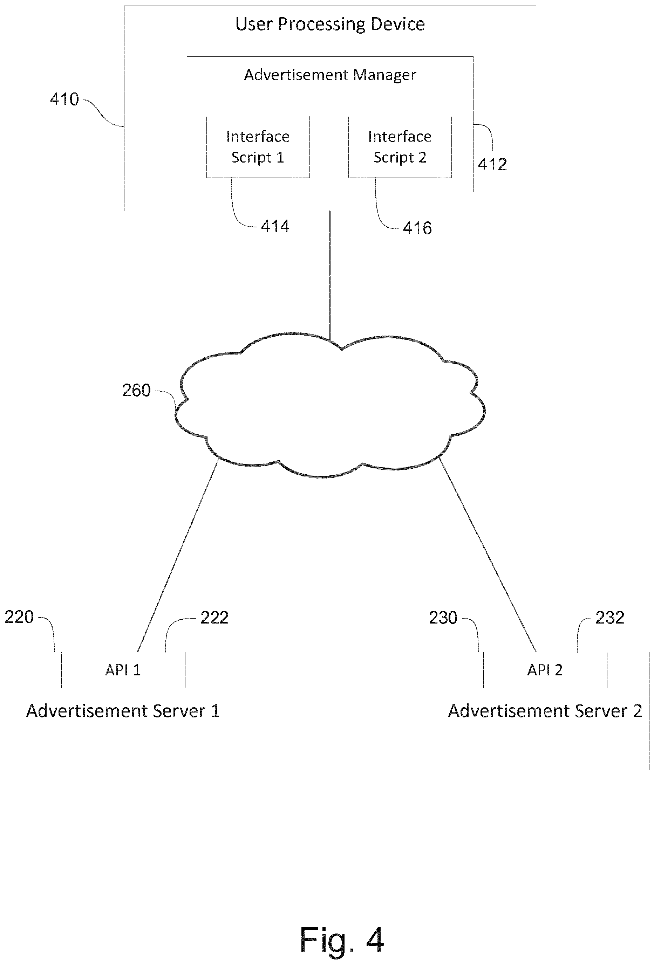

Figure 4 schematically illustrates some of the functional processing modules of a user processing device and a plurality of advertisement servers in certain embodiments.

Referring to Figure 4, a single user processing device 410 is illustrated in Figure 4 which represents any user processing device 202, 204, 206, 208, as well as the network 260, and two advertisement servers 220, 230 (although more advertisement servers may be provided).

User processing device 410 comprises an advertisement manager 412 that stores first interface script 414 and second interface script 416. In this embodiment, advertisement manager 412 is in the form of a dedicated application. The first interface script 414 is configured to translate an advertisement request into a format required by the API 222 of the first advertisement server 220, and to translate advertisement data defining an advertisement received from the first advertisement server 220. The second interface script 416 is configured to translate an advertisement request into a format required by the API 232 of the second advertisement server 230, and to translate advertisement data defining an advertisement received from the second advertisement server 230. These features enable a user processing device 410 to obtain advertisement data defining an advertisement from an advertisement server 220, 230, without the need for a coordinating server to translate data that is communicated between the user processing device 410 and the advertisement server 220, 230.

In this way, the user processing device can interface "directly" with each advertisement server, where "directly" is to be understood to mean without the need for communications to pass through a coordinating server. In addition, by utilising script, storage requirements are reduced compared to the compiled software in the communication interface 112 described above with reference to Figure 1. Furthermore, if the user processing device needs to communicate with an advertisement server with a different API, the user processing device can download the necessary interface script from an interface script server 250. This download is quick due to the small data size of the interface script.

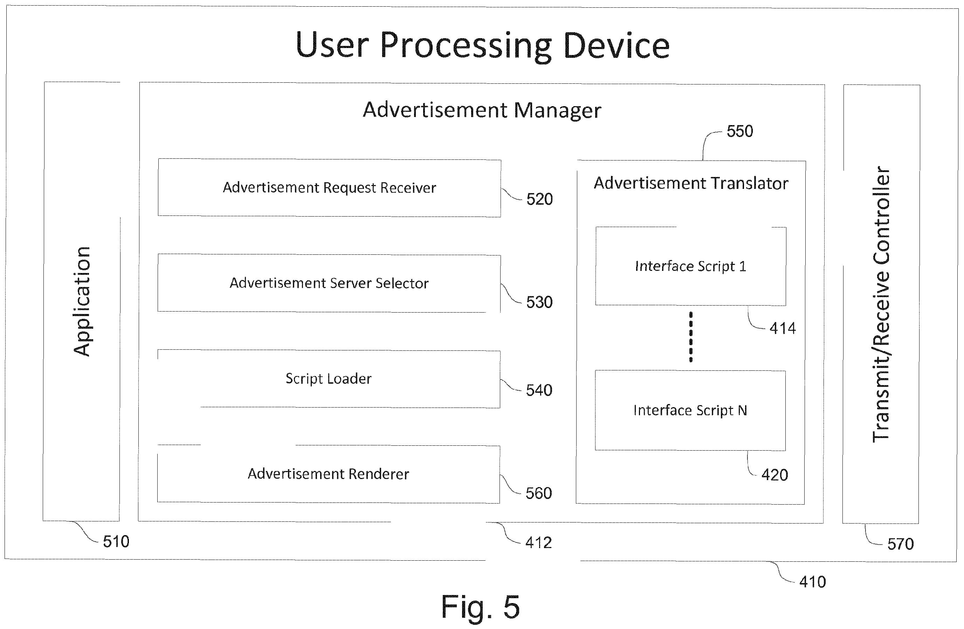

Figure 5 schematically illustrates further functional processing modules of the advertisement manager 412 in user processing device 410.

Referring to Figure 5, user processing device 410 stores computer program instructions defining at least one application 510. An application may be of any nature such as, by way of non-limiting example, an electronic game, a navigation app, a social networking app, a weather app, a travel app, a music app, an entertainment app, a business app, an education app, etc.

Advertisement manager 412 comprises advertisement request receiver 520, advertisement server selector 530, script loader 540, advertisement translator 550 and advertisement renderer 560.

Advertisement request receiver 520, advertisement server selector 530 and script loader 540 may be implemented in compiled code.

Advertisement request receiver 520 is operable to receive an advertisement request from an application 510.

Advertisement server selector 530 is operable to select an advertisement server from the plurality of advertisement servers 220, 230 as a selected advertisement server from which to obtain advertisement data for an advertisement request received from an application 510 by advertisement request receiver 520.

Script loader 540 is operable to download a respective interface script for each advertisement server having a different API. In the present embodiment, script loader 540 is operable to determine if interface script for the advertisement server selected by advertisement server selector 530 is available on the user processing device 410. Script loader 540 is further operable to download the interface script for the selected advertisement server if it is determined that the interface script is not available on the user processing device 410.

Advertisement translator 550 comprises respective interface script 414 ... 420 for each advertisement server. Interface script may comprise, by way of non-limiting example, JavaScript. Advertisement translator 550 is operable to translate an advertisement request received from an application 510 by advertisement request receiver 520, using the interface script for the advertisement server selected by advertisement server 530, into a format required by the API of the selected advertisement server. Advertisement translator 550 is further operable, using the interface script, to translate advertisement data received from the selected advertisement server. By way of non-limiting example, advertisement translator 550 may be operable to translate advertisement data received from a selected advertisement server into Mobile Rich-Media Ad Interface Definitions, MRAID, compatible data, according to the standard defined for example in IAB Mobile Rich-Media Ad Interface Definitions (MRAID) version 2.0, released September 27, 2012, with clarifications April 16, 2013. By way of further non-limiting example, advertisement translator 550 may be operable to translate advertisement data received from a selected advertisement server into Video Ad Serving Template, VAST, compatible data, according to the standard defined for example in IAB Video Ad Serving Template (VAST) version 3.0, published July 19, 2012. As noted previously, in this embodiment, script loader 540 is operable to download interface script necessary for communication with an advertisement server if the interface script is not already available to advertisement translator 560 on user processing device 410.

Advertisement renderer 560 is operable to render advertisement data received from an advertisement server and translated by advertisement translator 550. Advertisement renderer 560 may be operable to render the translated advertisement data to display the advertisement in a web view. By way of non-limiting example, advertisement renderer 560 may be operable to perform the rendering using MRAID script. By way of further non-limiting example, advertisement renderer 560 may be operable to perform the rendering using VAST script.

User processing device 410 further comprises transmit/receive controller 570. Transmit/receive controller 570 comprises one or more input/output communication modules 320 for transmitting data to, and receiving data from, network 260.

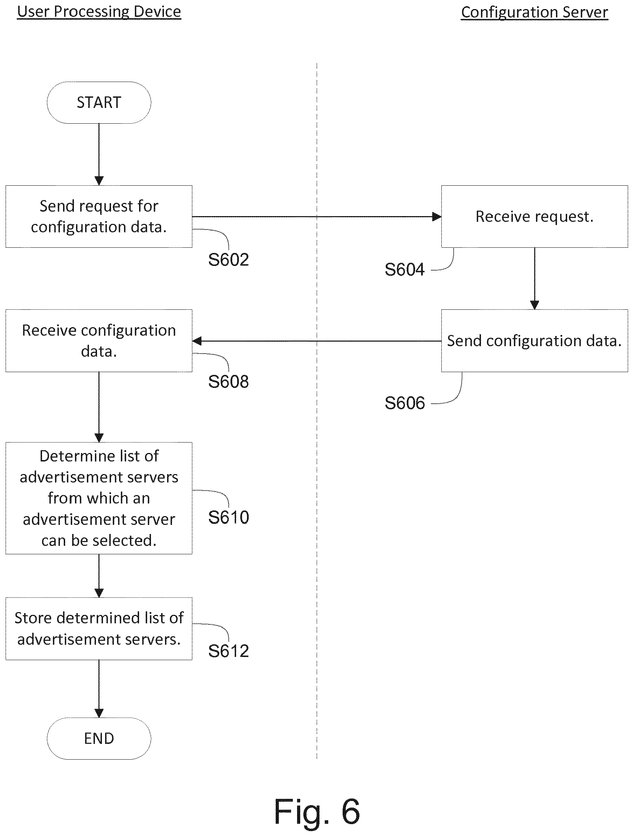

The processing operations performed by a user processing device 410 will now be described with reference to Figures 6, 7A, 7B and 8. Within these figures the identity of the apparatus performing each processing operation can be determined from the heading at the top of the column in which the processing operation is shown.

Figure 6 shows the processing operations performed by a user processing device 410 to obtain configuration data from a configuration server 240. The configuration data comprises data identifying advertisement servers from which advertisement server selector 530 may select when selecting an advertisement server from which to obtain advertisement data for an advertisement request. The processing operations shown in Figure 6 may be repeated at a predetermined time interval, such as every 24 hours, to update the list of servers from which advertisement server selector 530 can select. Alternatively, the processing operations shown in Figure 6 may be repeated in response to other triggering events such as the user processing device establishing an internet connection, or the advertisement request receiver 520 receiving an advertisement request, or any other triggering event.

Referring to Figure 6, at step S602, advertisement server selector 530 sends a request for configuration data to a configuration server 240 via transmit/receive controller 570 and network 260.

At step S604, configuration server 240 receives the request and, at step S606, sends configuration data to the user processing device 410. As mentioned above, the configuration data defines advertisement servers from which advertisement server selector 530 can select.

At step S608, advertisement server selector 530 receives the configuration data and, at step S610, processes the configuration data to determine advertisement servers from which an advertisement server can be selected.

At step S612, advertisement server selector 530 stores data defining the determined advertisement servers.

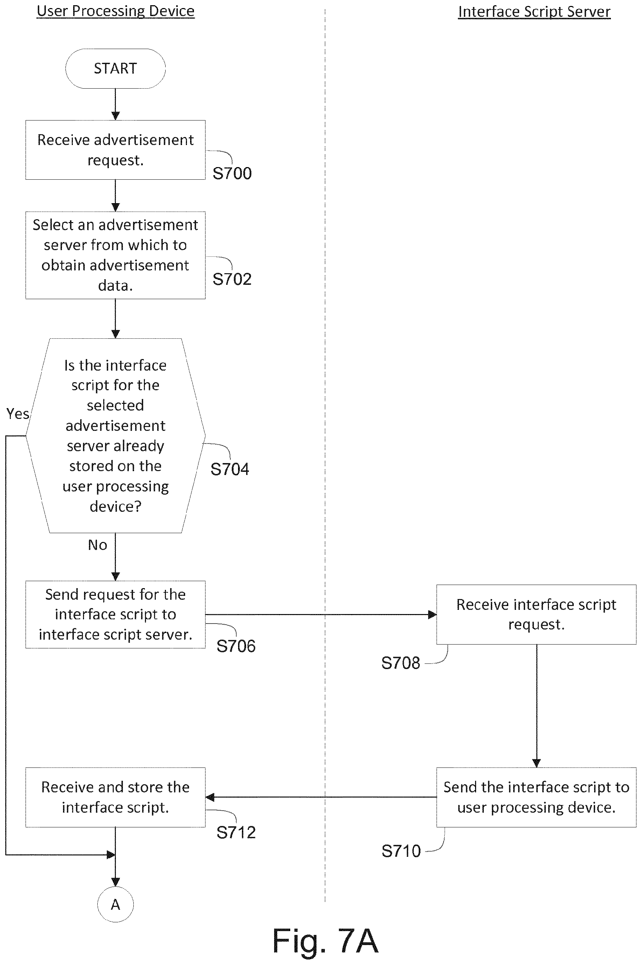

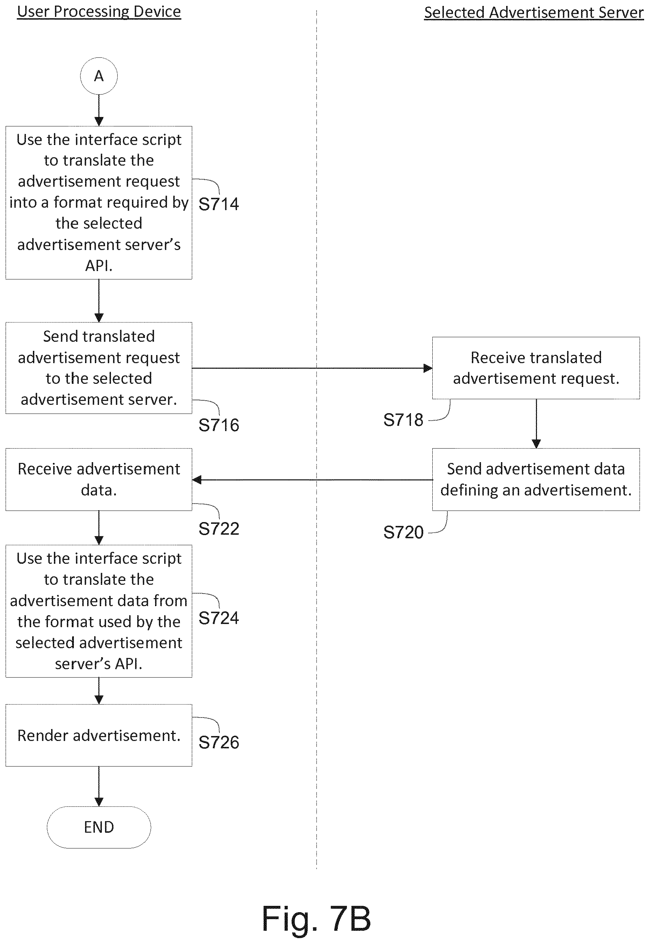

Figures 7A and 7B show the processing operations performed by a user processing device 410 in one embodiment to obtain advertisement data defining an advertisement from an advertisement server, and to render the advertisement data so as to display the advertisement to the user.

Referring to Figures 7A and 7B, at step S700, advertisement request receiver 520 receives an advertisement request from an application 510 on user processing device 410. This request may be generic or may specify, for example, a container in which an advertisement is to be displayed. The specification of additional details by application 510 allows the most appropriate advertisement to be supplied.

At step S702, advertisement server selector 530 selects an advertisement server from which to obtain advertisement data for the advertisement request. Advertisement server selector 530 selects the advertisement server from the advertisement servers defined by the data stored at step S612.

At step S704, script loader 540 determines whether interface script for the selected advertisement server is available on the user processing device 410. The interface script for the selected advertisement server may, for example, be available on the user processing device 410 as a result of a previous download by script loader 540 or as a result of being provided with the application defining advertisement manager 412.

If it is determined that interface script for the selected advertisement server is already available on the user processing device, then processing proceeds to step S714. On the other hand, if it is determined at step S704 that interface script it not available for the selected advertisement server, then processing proceeds to step S706, at which script loader 540 sends a request for the interface script to interface script server 250 via transmit/receive controller 570 and network 260.

At step S708, interface script server 520 receives the interface script request and, at step S710, sends the requested interface script to user processing device 410.

At step S712, user processing device 410 receives and stores the interface script. As noted previously, this downloading of script data can be carried out in an efficient way without necessarily introducing time delays, due to the small data size of the necessary script. Interface script may be cached in volatile working memory 330 or stored in non-volatile memory 340, and may be stored, for example, for a fixed period (e.g. a day, a month, etc) or until a clean-up operation is performed.

At step S714, advertisement translator 550 uses the interface script for the selected advertisement server to translate the advertisement request received at step S700 into a format required by the API of the selected advertisement server.

At step S716, advertisement translator 550 sends the translated advertisement request to the selected advertisement server via transmit/receive controller 570 and network 260.

At step S718, the selected advertisement server receives the translated advertisement request and is able to process it because the request is in the correct format required by the API of the selected advertisement server.

At step S720, the selected advertisement server sends the requested advertisement data defining an advertisement to the user processing device 410 via network 260.

At step S722, user processing device 410 receives the advertisement data.

At step S724, advertisement translator 550 uses the interface script for the selected advertisement receiver to parse and translate the received advertisement data from the format used by the selected advertisement server's API into a format that can be rendered by advertisement renderer 560. By way of non-limiting example, advertisement translator 550 may translate the advertisement data into Mobile Rich-Media Ad Interface Definitions (MRAID) compatible data, for example as defined in IAB Mobile Rich-Media Ad Interface Definitions (MRAID) version 2.0, released September 27, 2012, with clarifications April 16, 2013. By way of further non-limiting example, advertisement translator 550 may translate the advertisement data into Video Ad Serving Template, VAST, compatible data, according to the standard defined for example in IAB Video Ad Serving Template (VAST) version 3.0, published July 19, 2012.

At step S726, advertisement renderer 560 renders the translated advertisement data to display the advertisement to the user on the display of user processing device 410. Advertisement renderer 560 may be configured to render the translated advertisement data to display the advertisement in a web view. By way of non-limiting example, advertisement renderer 560 may be operable to perform the rendering using MRAID script. By way of further non-limiting example, advertisement renderer 560 may be operable to perform the rendering using VAST script.

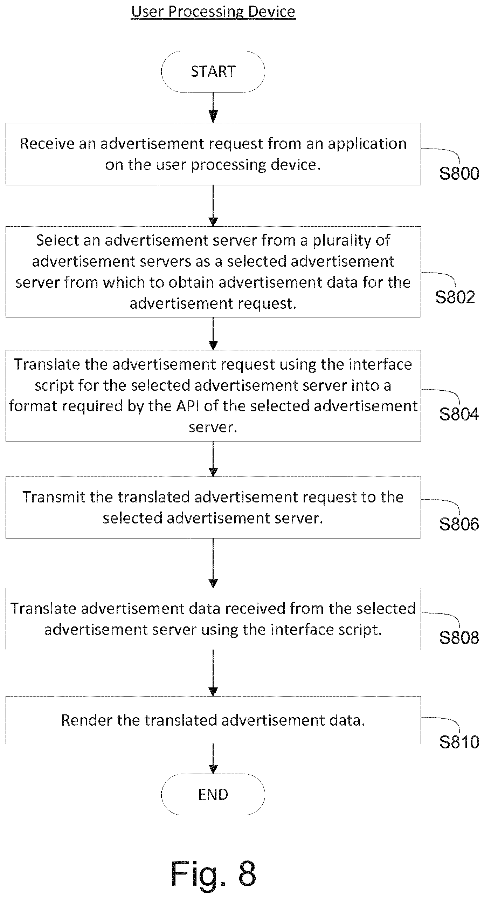

It will be appreciated from the description above that certain embodiments of the present invention perform processing operations to effect a method, performed by a user processing device, of obtaining and rendering advertisement data defining advertisements from an advertisement server within a plurality of advertisement servers that each provide a different respective application programming interface, API, for communication therewith, as shown in Figure 8.

Referring to Figure 8 at step S800 an advertisement request is received from an application on the user processing device.

At step S802, an advertisement server is selected from a plurality of advertisement servers as a selected advertisement server from which to obtain advertisement data for the advertisement request.

At step S804, the advertisement request is translated using an interface script for the selected advertisement server into a format required by the API of the selected advertisement server. At step S806, the translated advertisement request is transmitted to the selected advertisement server.

At step S808, advertisement data received from the selected advertisement server is translated using the interface script.

At step S810, the translated advertisement data is rendered.

### [Modifications]

Many modifications can be made to the embodiments described above without departing from the scope of the present invention.

For example, in the embodiment described above, script loader 540 is operable to determine if interface script for a selected advertisement server is available on the user processing device and is operable to download the interface script if it is determined that the interface script is not available on the user processing device. However, instead or in addition, script loader 540 may be arranged to download scripts for some or all of the advertisement servers before an advertisement request is received from an application on the user processing device. That is, script loader 540 may perform one or more script downloads at times independent of the receipt of advertisement requests and the selection of advertisement servers for the advertisement requests.

In the embodiment described above, the processing operations described with reference to Figure 6 are performed in order for a user processing device 410 to request and obtain configuration data from a configuration server 240. However, instead a configuration server 240 may push configuration data to a user processing device 410 without the user processing device 410 requesting it.

By way of a further example, advertisement manager 412 need not be a dedicated application as in the embodiment described above, but instead can be part of an application 510 that has a different purpose.

In the embodiment described, the advertisement server selector 530 is free to make a selection of an advertisement server from any of the advertisement servers defined in the configuration data received from a configuration server. However, instead, the configuration data may define which advertisement server the advertisement server selector 530 should select by defining a selection order for the advertisement servers.

In the embodiment described above, additional functionality can be provided to inform an advertisement server about an advertisement event on the user processing device, such as when an advertisement has been clicked on, shown in full, and/or shown in part. This may be accomplished by sending notifications from the user processing device to the relevant advertisement server. More particularly, advertisement translator 550 may extract, translate and store a notification received from an advertisement server with advertisement data. When advertisement manager 412, in conjunction with advertisement renderer 560 detects that a relevant advertisement event has occurred with regard to the advertisement (such as the user clicking on the advertisement, the advertisement being rendered in full, the advertisement being rendered in part, etc), advertisement translator 550 may send a notification of the event to the advertisement server from which the advertisement data was received.

A person skilled in the art will, of course, recognise that modifications other than those described above can be made.

## Claims

1. A system comprising:
a plurality of advertisement servers (220, 230), each advertisement server operable to provide advertisement data defining advertisements and each advertisement server providing a different respective application programming interface, API, (222, 232) for communication therewith; and
a user processing device (410), comprising:
a script loader (540) operable to download a respective interface script (414, 420) for each advertisement server;
an advertisement request receiver (520) operable to receive an advertisement request from an application (510) on the user processing device;
an advertisement server selector (530) operable to select an advertisement server from the plurality of advertisement servers as a selected advertisement server from which to obtain advertisement data for the advertisement request;
an advertisement translator (550) operable to translate the advertisement request using the interface script for the selected advertisement server into a format required by the API of the selected advertisement server, to send the translated advertisement request to the selected advertisement server and further operable to translate advertisement data received from the selected advertisement server; and
an advertisement renderer (560) operable to render the translated advertisement data.

2. A user processing device (410) operable to obtain and render advertisement data defining advertisements from a plurality of advertisement servers, each advertisement server providing a different respective application programming interface, API, for communication therewith, the user processing device comprising:
a script loader (540) operable to download a respective interface script (414, 420) for each advertisement server;
an advertisement request receiver (520) operable to receive an advertisement request from an application on the user processing device;
an advertisement server selector (530) operable to select an advertisement server from the plurality of advertisement servers as a selected advertisement server from which to obtain advertisement data for the advertisement request;
an advertisement translator (550) operable to translate the advertisement request using the interface script for the selected advertisement server into a format required by the API of the selected advertisement server, to send the translated advertisement request to the selected advertisement server, and further operable to translate advertisement data received from the selected advertisement server; and
an advertisement renderer (560) operable to render the translated advertisement data.

3. A user processing device (410) according to Claim 2, wherein the script loader (540) is operable to determine if the interface script for the selected advertisement server is available on the user processing device and operable to download the interface script if it is determined that the interface script is not available on the user processing device.

4. A user processing device (410) according to Claim 2 or Claim 3, wherein the interface script for each advertisement server comprises Java Script.

5. A user processing device (410) according to any of Claims 2 to 4, wherein the advertisement renderer (560) is operable to render the translated advertisement data to display the advertisement in a web view.

6. A user processing device (410) according to any of Claims 2 to 5, wherein:
the advertisement translator (550) is operable to translate advertisement data received from a selected advertisement server into Mobile Rich-Media Ad Interface Definitions, MRAID, format data; and
the advertisement renderer (560) is operable to perform the rendering using MRAID script.

7. A user processing device (410) according to any of Claims 2 to 6, wherein:
the advertisement translator (550) is operable to translate advertisement data received from a selected advertisement server into Video Ad Serving Template, VAST, format data; and
the advertisement renderer (560) is operable to perform the rendering using VAST script.

8. A user processing device (410) according to any of Claims 2 to 7, wherein the advertisement request receiver (520), advertisement server selector (530) and script loader (540) are implemented in compiled code.

9. A method of obtaining and rendering advertisement data defining advertisements from an advertisement server within a plurality of advertisement servers that each provide a different respective application programming interface, API, for communication therewith, the method being performed by a user processing device and the method comprising:
receiving (S700) an advertisement request from an application on the user processing device;
selecting (S702) an advertisement server from the plurality of advertisement servers as a selected advertisement server from which to obtain advertisement data for the advertisement request;
translating (S714) the advertisement request using an interface script for the selected advertisement server into a format required by the API of the selected advertisement server;
sending (S716) the translated advertisement request to the selected advertisement server;
translating (S724) advertisement data received from the selected advertisement server using the interface script; and
rendering (S726) the translated advertisement data.

10. A method according to Claim 9, further comprising:
downloading (S706, S712) a respective interface script for each of the plurality of advertisement servers.

11. A method according to Claim 9 or Claim 10, further comprising:
determining (S704) if the interface script for the selected advertisement server is available on the user processing device and downloading (S706, S712) the interface script if it is determined that the interface script is not available on the user processing device.

12. A method according to any of Claims 9 to 11, wherein the interface script for each advertisement server comprises Java Script.

13. A method according to any of Claims 9 to 12, wherein the translated advertisement data is rendered to display the advertisement in a web view.

14. A method according to any of Claims 9 to 13, wherein:
the advertisement data received from the selected advertisement server is translated into Mobile Rich-Media Ad Interface Definitions, MRAID, format data; and
the translated advertisement data is rendered using MRAID script.

15. A method according to any of Claims 9 to 14, wherein:
the advertisement data received from the selected advertisement server is translated into Video Ad Serving Template, VAST, format data; and
the translated advertisement data is rendered using VAST script.

16. A non-transitory storage medium storing computer program instructions which, when executed by a processor of a user processing device, cause the user processing device to perform a method according to any of claims 9-15.

## Patentansprüche

1. System, umfassend:
eine Vielzahl von Werbeservern (220, 230), wobei jeder Werbeserver betrieben werden kann, um Werbedaten bereitzustellen, die Werbungen definieren, und jeder Werbeserver eine unterschiedliche jeweilige Anwendungsprogrammierschnittstelle (API) (222, 232) zur Kommunikation damit bereitstellt; und
eine Benutzerverarbeitungsvorrichtung (410), umfassend:
einen Skriptlader (540), der betrieben werden kann, um ein jeweiliges Schnittstellenskript (414, 420) für jeden Werbeserver herunterzuladen;
einen Werbeanforderungsempfänger (520), der betrieben werden kann, um eine Werbeanforderung von einer Anwendung (510) auf der Benutzerverarbeitungsvorrichtung zu empfangen;
einen Werbeserver-Selektor (530), der betrieben werden kann, um einen Werbeserver aus der Vielzahl von Werbeservern als einen ausgewählten Werbeserver auszuwählen, von dem Werbedaten für die Werbeanforderung erhalten werden sollen;
einen Werbeübersetzer (550), der betrieben werden kann, um die Werbeanforderung unter Verwendung des Schnittstellenskripts für den ausgewählten Werbeserver in ein Format zu übersetzen, das von der API des ausgewählten Werbeservers benötigt wird, um die übersetzte Werbeanforderung an den ausgewählten Werbeserver zu senden, und weiter betrieben werden kann, um die Werbedaten, die von dem ausgewählten Werbeserver empfangen werden, zu übersetzen; und
einen Werberenderer (560), der betrieben werden kann, um die übersetzten Werbedaten zu rendern.

2. Benutzerverarbeitungsvorrichtung (410), die betrieben werden kann, um Werbedaten, die Werbungen definieren, von einer Vielzahl von Werbeservern zu erhalten und zu rendern, wobei jeder Werbeserver eine unterschiedliche jeweilige Anwendungsprogrammierschnittstelle (API) zur Kommunikation damit bereitstellt, wobei die Benutzerverarbeitungsvorrichtung umfasst:
einen Skriptlader (540), der betrieben werden kann, um ein jeweiliges Schnittstellenskript (414, 420) für jeden Werbeserver herunterzuladen;
einen Werbeanforderungsempfänger (520), der betrieben werden kann, um eine Werbeanforderung von einer Anwendung auf der Benutzerverarbeitungsvorrichtung zu empfangen;
einen Werbeserver-Selektor (530), der betrieben werden kann, um einen Werbeserver aus der Vielzahl von Werbeservern als einen ausgewählten Werbeserver auszuwählen, von dem Werbedaten für die Werbeanforderung erhalten werden sollen;
einen Werbeübersetzer (550), der betrieben werden kann, um die Werbeanforderung unter Verwendung des Schnittstellenskripts für den ausgewählten Werbeserver in ein Format zu übersetzen, das von der API des ausgewählten Werbeservers benötigt wird, um die übersetzte Werbeanforderung an den ausgewählten Werbeserver zu senden und weiter betrieben werden kann, um die Werbedaten, die von dem ausgewählten Werbeserver empfangen werden, zu übersetzen; und
einen Werberenderer (560), der betrieben werden kann, um die übersetzten Werbedaten zu rendern.

3. Benutzerverarbeitungsvorrichtung (410) nach Anspruch 2, wobei
der Skriptlader (540) betrieben werden kann, um zu bestimmen, ob das Schnittstellenskript für den ausgewählten Werbeserver auf der Benutzerverarbeitungsvorrichtung verfügbar ist, und betrieben werden kann, um das Schnittstellenskript herunterzuladen, wenn bestimmt wird, dass das Schnittstellenskript auf der Benutzerverarbeitungsvorrichtung nicht verfügbar ist.

4. Benutzerverarbeitungsvorrichtung (410) nach Anspruch 2 oder Anspruch 3, wobei das Schnittstellenskript für jeden Werbeserver JavaScript umfasst.

5. Benutzerverarbeitungsvorrichtung (410) nach einem der Ansprüche 2 bis 4, wobei der Werberenderer (560) betrieben werden kann, um die übersetzten Werbedaten zu rendern, um die Werbung in einer Webansicht anzuzeigen.

6. Benutzerverarbeitungsvorrichtung (410) nach einem der Ansprüche 2 bis 5, wobei:
der Werbeübersetzer (550) betrieben werden kann, um Werbedaten zu übersetzen, die von einem ausgewählten Werbeserver in MRAID-Formatdaten (Mobile Rich-Media Ad Interface Definitions) empfangen werden; und
der Werberenderer (560) betrieben werden kann, um das Rendern unter Verwendung des MRAID-Skripts durchzuführen.

7. Benutzerverarbeitungsvorrichtung (410) nach einem der Ansprüche 2 bis 6, wobei:
der Werbeübersetzer (550) betrieben werden kann, um Werbedaten zu übersetzen, die von einem ausgewählten Werbeserver in VAST-Formatdaten (Video Ad Serving Template) empfangen werden; und
der Werberenderer (560) betrieben werden kann, um das Rendern unter Verwendung des VAST-Skripts durchzuführen.

8. Benutzerverarbeitungsvorrichtung (410) nach einem der Ansprüche 2 bis 7, wobei der Werbeanforderungsempfänger (520), der Werbeserver-Selektor (530) und der Skriptlader (540) in kompiliertem Code implementiert sind.

9. Verfahren zum Erhalten und Rendern von Werbedaten, die Werbungen von einem Werbeserver innerhalb einer Vielzahl von Werbeservern definieren, die jeweils eine unterschiedliche jeweilige Anwendungsprogrammierschnittstelle (API) zur Kommunikation damit bereitstellen, wobei das Verfahren durch eine Benutzerverarbeitungsvorrichtung durchgeführt wird und das Verfahren umfasst:
Empfangen (S700) einer Werbeanforderung von einer Anwendung auf der Benutzerverarbeitungsvorrichtung;
Auswählen (S702) eines Werbeservers aus der Vielzahl von Werbeservern als einen ausgewählten Werbeserver, von dem Werbedaten für die Werbeanforderung erhalten werden sollen;
Übersetzen (S714) der Werbeanforderung unter Verwendung eines Schnittstellenskripts für den ausgewählten Werbeserver in ein Format, das von der API des ausgewählten Werbeservers benötigt wird;
Senden (S716) der übersetzten Werbeanforderung an den ausgewählten Werbeserver;
Übersetzen (S724) der Werbedaten, die von dem ausgewählten Werbeserver empfangen wurden, unter Verwendung des Schnittstellenskripts; und
Rendern (S726) der übersetzten Werbedaten.

10. Verfahren nach Anspruch 9, weiter umfassend:
Herunterladen (S706, S712) eines entsprechenden Schnittstellenskripts für jeden der Vielzahl von Werbeservern.

11. Verfahren nach Anspruch 9 oder Anspruch 10, weiter umfassend:
Bestimmen (S704), ob das Schnittstellenskript für den ausgewählten Werbe (S706, S712) des Schnittstellenskripts, wenn bestimmt wird, dass das Schnittstellenskript auf der Benutzerverarbeitungsvorrichtung nicht verfügbar ist.

12. Verfahren nach einem der Ansprüche 9 bis 11, wobei das Schnittstellenskript für jeden Werbeserver JavaScript umfasst.

13. Verfahren nach einem der Ansprüche 9 bis 12, wobei die übersetzten Werbedaten gerendert werden, um die Werbung in einer Webansicht anzuzeigen.

14. Verfahren nach einem der Ansprüche 9 bis 13, wobei:
die Werbedaten, die von dem ausgewählten Werbeserver empfangen werden, in MRAID-Formatdaten übersetzt werden; und
die übersetzten Werbedaten unter Verwendung des MRAID-Skripts gerendert werden.

15. Verfahren nach einem der Ansprüche 9 bis 14, wobei:
die Werbedaten, die von dem ausgewählten Werbeserver empfangen werden, in VAST-Formatdaten übersetzt werden; und
die übersetzten Werbedaten unter Verwendung des VAST-Skripts gerendert werden.

16. Nichtflüchtiges Speichermedium, das Computerprogrammanweisungen speichert, die, wenn sie durch einen Prozessor einer Benutzerverarbeitungsvorrichtung ausgeführt werden, die Benutzerverarbeitungsvorrichtung veranlassen, ein Verfahren nach einem der Ansprüche 9-15 durchzuführen.

## Revendications

1. Système comprenant :
une pluralité de serveurs de publicité (220, 230), chaque serveur de publicité pouvant fonctionner pour fournir des données de publicité définissant des publicités et chaque serveur de publicité fournissant une interface de programmation d'application, API, respective différente (222, 232) pour une communication avec celui-ci ; et
un dispositif de traitement d'utilisateur (410), comprenant :
un chargeur de script (540) pouvant fonctionner pour télécharger un script d'interface respectif (414, 420) pour chaque serveur de publicité ;
un récepteur de demande de publicité (520) pouvant fonctionner pour recevoir une demande de publicité depuis une application (510) sur le dispositif de traitement d'utilisateur ;
un sélecteur de serveur de publicité (530) pouvant fonctionner pour sélectionner un serveur de publicité parmi la pluralité de serveurs de publicité comme un serveur de publicité sélectionné duquel obtenir des données de publicité pour la demande de publicité ;
un convertisseur de publicité (550) pouvant fonctionner pour convertir la demande de publicité en utilisant le script d'interface pour le serveur de publicité sélectionné en un format exigé par l'API du serveur de publicité sélectionné, pour envoyer la demande de publicité convertie au serveur de publicité sélectionné et pouvant en outre fonctionner pour convertir des données de publicité reçues depuis le serveur de publicité sélectionné ; et
un dispositif de rendu de publicité (560) pouvant fonctionner pour rendre les données de publicité converties.

2. Dispositif de traitement d'utilisateur (410) pouvant fonctionner pour obtenir et rendre des données de publicité définissant des publicités depuis une pluralité de serveurs de publicité, chaque serveur de publicité fournissant une interface de programmation d'application, API, respective différente pour une communication avec celui-ci, le dispositif de traitement d'utilisateur comprenant :
un chargeur de script (540) pouvant fonctionner pour télécharger un script d'interface respectif (414, 420) pour chaque serveur de publicité ;
un récepteur de demande de publicité (520) pouvant fonctionner pour recevoir une demande de publicité depuis une application sur le dispositif de traitement d'utilisateur ;
un sélecteur de serveur de publicité (530) pouvant fonctionner pour sélectionner un serveur de publicité parmi la pluralité de serveurs de publicité comme un serveur de publicité sélectionné duquel obtenir des données de publicité pour la demande de publicité ;
un convertisseur de publicité (550) pouvant fonctionner pour convertir la demande de publicité en utilisant le script d'interface pour le serveur de publicité sélectionné en un format exigé par l'API du serveur de publicité sélectionné, pour envoyer la demande de publicité convertie au serveur de publicité sélectionné, et pouvant en outre fonctionner pour convertir des données de publicité reçues depuis le serveur de publicité sélectionné ; et
un dispositif de rendu de publicité (560) pouvant fonctionner pour rendre les données de publicité converties.

3. Dispositif de traitement d'utilisateur (410) selon la revendication 2, dans lequel le chargeur de script (540) peut fonctionner pour déterminer si le script d'interface pour le serveur de publicité sélectionné est disponible sur le dispositif de traitement d'utilisateur et peut fonctionner pour télécharger le script d'interface s'il est déterminé que le script d'interface n'est pas disponible sur le dispositif de traitement d'utilisateur.

4. Dispositif de traitement d'utilisateur (410) selon la revendication 2 ou la revendication 3, dans lequel le script d'interface pour chaque serveur de publicité comprend Java Script.

5. Dispositif de traitement d'utilisateur (410) selon l'une quelconque des revendications 2 à 4, dans lequel le dispositif de rendu de publicité (560) peut fonctionner pour rendre les données de publicité converties pour afficher la publicité dans une vue Web.

6. Dispositif de traitement d'utilisateur (410) selon l'une quelconque des revendications 2 à 5, dans lequel :
le convertisseur de publicité (550) peut fonctionner pour convertir des données de publicité reçues depuis un serveur de publicité sélectionné en données de format Mobile Rich-Media Ad Interface Definitions, MRAID ; et
le dispositif de rendu de publicité (560) peut fonctionner pour exécuter le rendu en utilisant un script MRAID.

7. Dispositif de traitement d'utilisateur (410) selon l'une quelconque des revendications 2 à 6, dans lequel :
le convertisseur de publicité (550) peut fonctionner pour convertir des données de publicité reçues depuis un serveur de publicité sélectionné en données de format Video Ad Serving Template, VAST ; et
le dispositif de rendu de publicité (560) peut fonctionner pour exécuter le rendu en utilisant un script VAST.

8. Dispositif de traitement d'utilisateur (410) selon l'une quelconque des revendications 2 à 7, dans lequel le récepteur de demande de publicité (520), le sélecteur de serveur de publicité (530) et le chargeur de script (540) sont mis en œuvre en code compilé.

9. Procédé d'obtention et de rendu de données de publicité définissant des publicités depuis un serveur de publicité dans une pluralité de serveurs de publicité qui fournissent chacun une interface de programmation d'application, API, respective différente pour une communication avec ceux-ci, le procédé étant exécuté par un dispositif de traitement d'utilisateur et le procédé comprenant les étapes consistant à :
recevoir (5700) une demande de publicité depuis une application sur le dispositif de traitement d'utilisateur ;
sélectionner (S702) un serveur de publicité parmi la pluralité de serveurs de publicité comme un serveur de publicité sélectionné duquel obtenir des données de publicité pour la demande de publicité ;
convertir (S714) la demande de publicité en utilisant un script d'interface pour le serveur de publicité sélectionné en un format exigé par l'API du serveur de publicité sélectionné ;
envoyer (S716) la demande de publicité convertie au serveur de publicité sélectionné ;
convertir (S724) des données de publicité reçues depuis le serveur de publicité sélectionné en utilisant le script d'interface ; et
rendre (S726) les données de publicité converties.

10. Procédé selon la revendication 9, comprenant en outre l'étape consistant à :
télécharger (S706, S712) un script d'interface respectif pour chacun de la pluralité de serveurs de publicité.

11. Procédé selon la revendication 9 ou la revendication 10, comprenant en outre les étapes consistant à :
déterminer (S704) si le script d'interface pour le serveur de publicité sélectionné est disponible sur le dispositif de traitement d'utilisateur et télécharger (S706, S712) le script d'interface s'il est déterminé que le script d'interface n'est pas disponible sur le dispositif de traitement d'utilisateur.

12. Procédé selon l'une quelconque des revendications 9 à 11, dans lequel le script d'interface pour chaque serveur de publicité comprend Java Script.

13. Procédé selon l'une quelconque des revendications 9 à 12, dans lequel les données de publicité converties sont rendues pour afficher la publicité dans une vue Web.

14. Procédé selon l'une quelconque des revendications 9 à 13, dans lequel :
les données de publicité reçues depuis le serveur de publicité sélectionné sont converties en données de format Mobile Rich-Media Ad Interface Definitions, MRAID ; et
les données de publicité converties sont rendues en utilisant un script MRAID.

15. Procédé selon l'une quelconque des revendications 9 à 14, dans lequel :
les données de publicité reçues depuis le serveur de publicité sélectionné sont converties en données de format Video Ad Serving Template, VAST; et
les données de publicité converties sont rendues en utilisant un script VAST.

16. Support de stockage non transitoire stockant des instructions de programme informatique qui, lorsqu'elles sont exécutées par un processeur d'un dispositif de traitement d'utilisateur, amènent le dispositif de traitement d'utilisateur à exécuter un procédé selon l'une quelconque des revendications 9 à 15.
